(19) Europäisches Patentamt

European Patent Office

Office européen des brevets

(11) **EP 2 262 216 B1**

(12) **FASCICULE DE BREVET EUROPEEN**

(45) Date de publication et mention de la délivrance du brevet:
**07.03.2018 Bulletin 2018/10**

(21) Numéro de dépôt: **10164782.4**

(22) Date de dépôt: **02.06.2010**

(51) Int Cl.:
***H04M 9/08*** *(2006.01)*

(54) **Procédé de détection d'une situation de double parole pour dispositif téléphonique "mains libres"**

Verfahren zur Erkennung einer Doppelsprech-Situation für Telefonfreisprechgerät

Method for detecting a double-talking situation for a hands-free telephone device.

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **09.06.2009 FR 0953802**

(43) Date de publication de la demande:
**15.12.2010 Bulletin 2010/50**

(73) Titulaire: **PARROT AUTOMOTIVE**
**75010 Paris (FR)**

(72) Inventeurs:
• **Hervé, Michael**
**75011 Paris (FR)**
• **Briot, Alexandre**
**75010 Paris (FR)**
• **Pochon, Benoît**
**75010 Paris (FR)**

(74) Mandataire: **Dupuis-Latour, Dominique et al**
**Bardehle Pagenberg**
**SO Square Opéra**
**5,rue Boudreau**
**75009 Paris (FR)**

(56) Documents cités:
GB-A- 2 342 832    US-A1- 2003 007 633
US-A1- 2008 101 622    US-B1- 6 795 550

**Description**

L'invention concerne de façon générale la réduction d'écho dans les dispositifs utilisant des signaux audio captés par un microphone, par exemple les téléphones, adaptateurs de type "mains-libres" et dispositifs analogues.

En particulier, l'invention peut être avantageusement appliquée à un dispositif "mains libres" utilisable en association avec un téléphone portable, notamment un dispositif "mains libres" autonome adaptable de manière amovible dans un véhicule automobile.

Un tel dispositif "mains-libres" pour véhicule automobile est par exemple décrit dans le WO 2008/049982 A1 (Parrot SA), qui décrit les divers traitements d'annulation et de suppression d'écho, de réduction de bruit, etc., appliqués à un signal capté par un micro recueillant le signal acoustique du locuteur proche.

L'écho ici considéré - à distinguer de l'"écho de ligne" cantonné à la voie de transmission et pour lequel on connaît diverses méthodes de filtrage - est l'écho acoustique, capté par le microphone et dû au phénomène de réverbération de l'environnement du locuteur, typiquement la pièce ou bien l'habitacle du véhicule où il se trouve, ainsi qu'au couplage acoustique direct entre microphone et haut-parleur.

De fait, le micro capte non seulement la voix du locuteur proche, mais également le bruit environnant et, surtout, l'écho acoustique issu du son reproduit par le haut-parleur. L'écho acoustique constitue un élément perturbateur majeur du dispositif pouvant aller, souvent, jusqu'à rendre incompréhensibles pour le locuteur distant (celui qui est à l'autre bout de la voie de transmission du signal téléphonique) les paroles du locuteur proche (celui dont les paroles sont noyées dans l'écho acoustique).

Cet effet est d'autant plus marqué que le microphone et le haut-parleur sont proches, et que la puissance acoustique restituée par le haut-parleur est importante - comme cela est très souvent le cas avec les systèmes embarqués dans un véhicule automobile, où le niveau sonore du haut-parleur est relativement élevé pour couvrir les bruits environnants.

De plus, nombre des dispositifs "mains libres" sont réalisés sous la forme d'appareils autonomes, amovibles, comprenant dans un même boîtier à la fois le microphone et le haut-parleur ainsi que les boutons de commande : la proximité (quelques centimètres) entre haut-parleur et microphone produit alors un niveau d'écho acoustique considérable, typiquement de l'ordre de vingt fois plus élevé que le signal de parole produit par le locuteur proche.

Cet effet se manifeste essentiellement dans les configurations dites "de double parole", c'est-à-dire lorsque les deux locuteurs parlent en même temps, car lorsque le locuteur distant parle le niveau de l'écho produit est considérablement supérieur au niveau moyen de la parole du locuteur proche.

Or ces phases de la communication sont importantes, car elles créent l'interactivité entre les interlocuteurs et il est important de les conserver (communication dite *"full-duplex"*, à l'inverse d'une communication alternée *"half-duplex"* empêchant l'un des locuteurs d'intervenir pendant que l'autre parle).

Cette situation de double parole est une situation très critique pour un traitement d'annulation d'écho, dit également AEC (*Acoustic Echo Canceller*), car il est nécessaire d'estimer dynamiquement la composante liée à l'écho acoustique et de soustraire cette estimation du signal global capté par le microphone, sans pour autant dégrader la composante liée à la parole du locuteur proche.

De plus, un traitement classique en présence d'écho met en oeuvre non seulement un module AEC d'annulation d'écho, mais également un post-traitement dit de suppression d'écho, qui applique au signal un gain variable visant à atténuer l'écho résiduel, mais de façon globale sans discriminer entre cet écho résiduel et la parole utile éventuellement présente. De ce fait, en période de double parole ce contrôle de gain temporel entraîne simultanément une dégradation notable de la parole utile.

Il existe divers algorithmes de détection de double parole permettant de détecter une telle situation pour adapter le traitement d'annulation d'écho et de suppression d'écho résiduel.

Ainsi, le US 2008/0101622 A1 décrit un traitement d'annulation d'écho mettant en oeuvre un ou deux détecteurs de double parole DTD (*Double Talk Detecting circuit*). Lorsque deux détecteurs DTD sont utilisés en parallèle, il est prévu un circuit évaluateur qui délivre un indicateur de statut (convergé/non convergé) du filtre adaptatif servant au traitement d'annulation d'écho. Ce circuit évaluateur est utilisé pour commander un commutateur permettant de substituer l'un des DTD à l'autre après que le filtre ait convergé. Cet indicateur ne contribue toutefois en aucune façon à la détermination de la présence ou non d'une double parole par l'un ni par l'autre des DTD. Le statut de convergence du filtre adaptatif est donc sans aucun effet sur la décision, prise par l'un ou l'autre DTD, de l'existence ou non d'une situation de double parole ; ce statut n'est utilisé qu'en aval des détecteurs de double parole, pour substituer l'un des DTD à l'autre.

De façon générale, les algorithmes de détection de double parole proposés jusqu'à présent sont relativement complexes, dans la mesure où ils sont basés sur une analyse de l'enveloppe spectrale du signal d'écho. La détection de double parole est donc relativement exigeante en termes de puissance de calcul, sans pour autant procurer une certitude élevée quant à la présence d'une réelle situation de double parole.

Une autre technique est proposée par le GB 2 342 832 A, consistant à opérer la détection en évaluant d'un itération à l'autre du filtre adaptatif la distance quadratique entre les coefficients courants du filtre et les coefficients antérieurs, pour discriminer entre situation de simple parole et de double parole : si, après que l'algorithme a convergé, les coefficients ne changent pas, cela révèle une situation de simple parole, alors qu'en double parole les coefficients varient en permanence. En sortie, le détecteur délivre au filtre les coefficients mis à jour pour qu'il les applique à l'itération suivante (les coefficients mis à jour étant éventuellement les mêmes que les précédents, si l'on est en simple parole et que le filtre a convergé).

L'un des buts de l'invention est de disposer d'un indicateur temporel de présence de double parole permettant de discriminer de façon efficace les périodes de double parole, sans mise en oeuvre d'algorithmes complexes et avec une efficacité significativement améliorée par rapport aux méthodes proposées jusqu'à présent.

Un autre but de l'invention est, en cas de situation de double parole avérée, d'optimiser les actions prises par les traitements d'annulation et de suppression d'écho du dispositif.

En effet, les techniques d'annulation d'écho ou AEC mettent en oeuvre des filtres adaptatifs modélisant le couplage acoustique microphone/haut-parleur par une transformation linéaire entre le signal du locuteur distant (c'est-à-dire le signal reproduit par le haut-parleur) et l'écho capté par le microphone. Cette transformation définit dynamiquement un filtre adaptatif qui est appliqué au signal incident provenant du locuteur distant, et le résultat de ce filtrage est soustrait du signal recueilli par le microphone, ce qui a pour effet d'annuler la majeure partie de l'écho acoustique. Un exemple d'algorithme adaptatif mettant en oeuvre un tel traitement est décrit par exemple dans le FR 2 792 146 A1 (Parrot SA), auquel on pourra se reporter pour plus de détails. Le US 2008/0101622 A1 précité met également en oeuvre ce type de traitement.

L'inconvénient, en cas de double parole, est que le signal de parole du locuteur proche est interprété par l'annuleur d'écho comme un bruit non corrélé, qui est susceptible de provoquer un défaut de convergence du filtre adaptatif, le plus souvent même une divergence de celui-ci, conduisant à une annulation insuffisante de l'écho. Pour éviter cet inconvénient, la solution conventionnelle consiste, en cas de double parole détectée, à figer les paramètres du filtre adaptatif pour éviter toute divergence de celui-ci. Mais il devient alors impossible, tant que la situation de double parole persiste, de prendre en compte les variations lentes du chemin acoustique susceptibles d'apparaître pendant cette période.

L'un des buts de l'invention est de proposer un remède à cette difficulté, en permettant au filtre adaptatif, même pendant les périodes de double parole, de continuer à prendre en compte l'évolution lente du chemin acoustique à l'origine de l'écho.

Le principe de base utilisé par l'invention consiste, pour détecter une situation de double parole, à :

i) observer et mettre en évidence des comportements caractéristiques de la divergence du filtre adaptatif, associés aux intervalles de double parole ;
ii) en dériver un indice représentatif ; et
iii) utiliser cet indice en tant que donnée d'entrée du détecteur de double parole.

En effet, l'annulation d'écho acoustique repose sur la recherche d'une corrélation entre le signal émis sur le haut-parleur et le signal capté par le microphone, c'est-à-dire sur une estimation de la réponse impulsionnelle de l'environnement (pièce ou habitacle du véhicule) du locuteur proche.

En période d'écho seul (hors double parole), l'algorithme converge rapidement vers le filtre réel ; en revanche, en période de double parole, le signal de parole du locuteur proche perturbe l'estimation de la réponse impulsionnelle et tend à faire diverger l'algorithme. Une divergence du filtre est donc très probablement liée à une double parole, et la détection de cette divergence (ou d'un comportement erratique) constitue un critère particulièrement efficace pour détecter une telle situation de double parole.

Plus précisément, l'invention propose un procédé du type général décrit par exemple dans le GB 2 342 832 A précité, exposé dans le préambule de la revendication 1.

De façon caractéristique, l'invention propose essentiellement de permettre au détecteur de double parole de piloter le pas d'adaptation de l'algorithme en fonction de l'état courant de la situation, double parole ou simple parole, de la manière spécifiée dans la partie caractérisante de la revendication 1.

Les sous-revendications visent divers aspects subsidiaires, avantageux, de l'invention.

Avantageusement, l'algorithme est également itéré avec une valeur spécifique de pas, propre au traitement de détection d'une situation de double parole, et différente des valeurs de pas utilisées pour le traitement d'annulation d'écho. Cette valeur spécifique de pas est indépendante de la présence ou non d'une situation de double parole, avec une valeur intermédiaire entre la première et la deuxième valeur de pas.

On va maintenant décrire un exemple de mise en oeuvre du dispositif de l'invention, en référence aux dessins annexés où les mêmes références numériques désignent d'une figure à l'autre des éléments identiques ou fonctionnellement semblables.

La Figure 1 est un schéma général montrant les différents étages impliqués dans les traitements d'annulation et de suppression d'écho d'un dispositif téléphonique "mains-libres".

La Figure 2 est un schéma fonctionnel illustrant les paramètres mis en oeuvre par l'algorithme d'élimination d'écho du dispositif de la Figure 1.

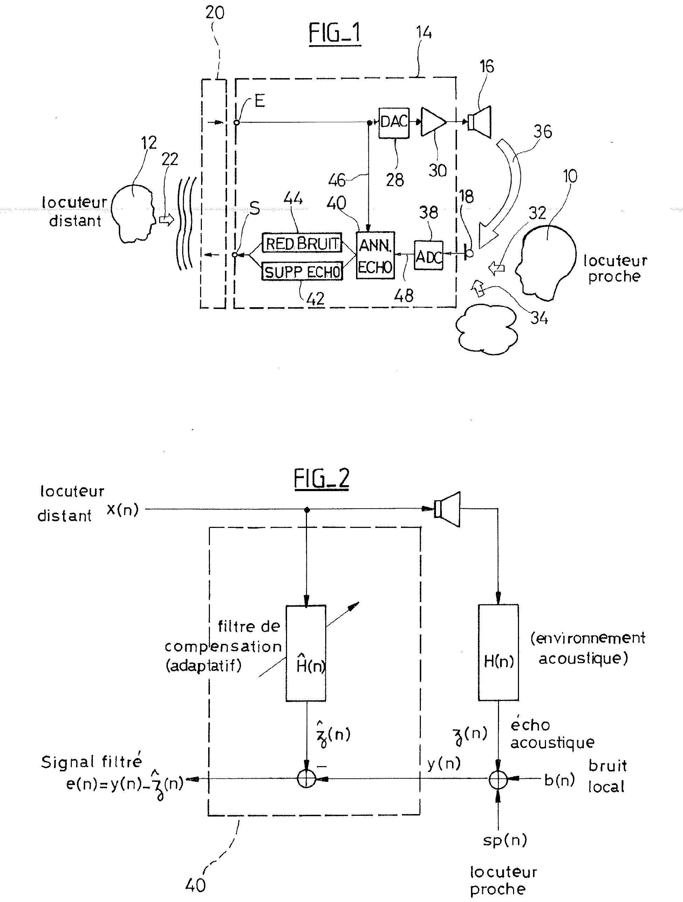

En référence à la figure 1, on va toute d'abord décrire la structure générale d'un dispositif "mains-libres" qui, de manière en elle-même connue, comprend des moyens d'annulation d'écho, de réduction d'écho et de réduction du bruit.

Un tel dispositif est destiné à supporter une conversation téléphonique entre deux personnes, à savoir un locuteur proche 10 et un locuteur distant 12. Le locuteur proche 10 est celui qui se trouve à proximité du dispositif "mains-libres" 14. Le locuteur distant 12 est celui avec lequel le locuteur proche est en conversation téléphonique.

Le dispositif 14 est typiquement un dispositif installé dans un véhicule automobile, à demeure ou de manière amovible. Il possède un haut-parleur 16 destiné à reproduire la parole du locuteur distant, et un microphone 18 destiné à capter la parole du locuteur proche 10. Le dispositif comporte également des moyens d'interfaçage, schématisés en 20, pour la transmission bidirectionnelle des signaux sur un réseau téléphonique, par exemple (mais de façon non limitative) une interface sans fil de type *Bluetooth* (marque déposée du Bluetooth SIG, Inc.) ou autre permettant de coupler le dispositif 14 au téléphone cellulaire portable du locuteur proche, par lequel ce dernier est lui-même en communication radiotéléphonique avec le locuteur distant.

Le signal incident reçu sur l'entrée E du dispositif 14, qui comprend la composante de parole 22 du locuteur distant 12, est appliqué à un convertisseur numérique/analogique 28, puis en entrée d'un amplificateur audio 30 qui reproduit le signal sur le haut-parleur 16.

Le microphone 18, quant à lui, capte un signal acoustique qui sera une combinaison (i) de la parole 32 du locuteur proche 10, (ii) du bruit ambiant 34 régnant dans l'environnement de ce dernier (par exemple dans l'habitacle du véhicule automobile) et (iii) du signal 36 reproduit par le haut-parleur 16.

Le signal 36 est un signal d'écho indésirable du point de vue du microphone 18. Comme on l'a indiqué plus haut, compte tenu des niveaux de fonctionnement de l'amplificateur 30, et du couplage important tenant à la proximité entre haut-parleur 16 et microphone 18, lorsque le locuteur distant 12 parle, le niveau du signal 36 peut atteindre vingt fois celui du signal de parole 32 du locuteur proche 10.

La réduction de l'écho acoustique est opérée, après numérisation du signal du microphone 18 via l'étage de conversion analogique/numérique 38, au moyen de trois traitements successifs : (i) annulation d'écho 40, (ii) suppression d'écho 42 et (iii) réduction de bruit 44. Ces traitements sont mis en oeuvre sous forme d'algorithmes appropriés exécutés par un mi-crocontrôleur ou un processeur de traitement des signaux incorporé au dispositif 14. Bien que, pour la clarté de l'exposé, ces traitements soient présentés sous forme de modules distincts, ils mettent en oeuvre des éléments communs, et correspondent en fait à une pluralité de fonctions globalement exécutées par un même logiciel.

Le module d'annulation d'écho 40 n'a essentiellement pas d'effet sur la parole du locuteur proche 10 : la voix du locuteur proche est donc intacte après l'annulation d'écho 40. L'annulation d'écho consiste à définir de façon dynamique un filtre de compensation recevant en entrée un signal de référence 46 provenant du locuteur distant (signal sur l'entrée E du dispositif) de manière à soustraire du signal 48 capté par le microphone 18 un signal adapté représentatif du signal reçu, pour donner en sortie un signal débarrassé de l'écho parasite. Ce traitement sera expliqué plus en détail ci-dessous, en référence à la figure 2.

Le module de suppression d'écho 42, disposé en sortie du module d'annulation d'écho 40, atténue jusqu'au niveau du bruit de fond l'écho résiduel audible subsistant pour diverses raisons telles que : identification du filtre imparfaite, modélisation linéaire approximative, présence de non-linéarités, etc.

Enfin, le module de réduction du bruit 44 a pour rôle de réduire le bruit de fond 34 capté par le microphone, tout en préservant la parole 32 du locuteur proche.

Le signal ainsi traité, débarrassé de son écho et débruité, est finalement délivré sur la sortie S du dispositif, pour transmission au locuteur distant par l'interface 20.

*Principe de l'annulation de l'écho acoustique*

L'annulation d'écho acoustique repose sur la détermination d'un filtre à réponse impulsionnelle finie (FIR) modélisant la réponse impulsionnelle réelle (inconnue) de la partie linéaire du couplage acoustique et mécanique entre le haut-parleur et le microphone, et dont la longueur dépendra de la configuration de l'environnement et de la fréquence d'échantillonnage.

Comme illustré schématiquement Figure 2, le principe de l'annulation d'écho (module référencé 40) consiste à estimer du mieux que possible ce filtre H, modélisant l'ensemble des éléments qui produisent l'écho, par un filtre de compensation $\hat{H}$ mis à jour à l'aide de méthodes adaptatives et permettant de générer un pseudo-écho ou écho estimé $\hat{z}(n)$ :

$$\hat{z}(n) = x(n) * \hat{H}(n)$$

$n$ représentant le numéro de l'échantillon courant, $x(n)$ représentant le signal du haut-parleur (signal de parole provenant du locuteur distant) et * désignant le produit de convolution.

L'écho estimé $\hat{z}(n)$ est soustrait du signal $y(n)$ capté par le microphone, ce signal capté étant lui-même la somme du signal de parole $sp(n)$ du locuteur local, du bruit local $b(n)$ *et* de l'écho acoustique (supposé linéaire) $z(n)$. Le signal résultant est le signal filtré ou signal d'erreur, désigné $e(n)$. Divers algorithmes peuvent être mis en oeuvre pour assurer l'adaptation dynamique du filtre de compensation $\hat{H}$.

Certains procédés utilisent un algorithme de type LMS (*Least Mean Squares*), ou NLMS (*Normalized LMS*) qui est une version normalisée du précédent. Ces algorithmes, qui sont relativement simples et peu exigeants en termes de ressources de calcul, reposent sur une minimisation de la puissance de l'erreur, problème qui peut être résumé à la résolution de l'équation d'adaptation du gradient déterministe :

$$\hat{H}(n) = \hat{H}(n-1) + \mu.E\{e(n-1).X(n)\}$$

$\hat{H}(n) = [\hat{h}_0, \hat{h}_1, ..., \hat{h}_{L-1}]$ étant le filtre adaptatif de *longueur L,*

$X(n) = [x(n), x(n-1), ...x(n-L+1)]^T$ étant le vecteur des $L$ derniers échantillons présents sur le haut-parleur, et

$\mu$ étant un facteur, appelé pas d'adaptation, qui contrôle la rapidité de convergence.

Le gradient stochastique ou LMS (*Least Mean Squares*) est une approximation du gradient déterministe, où l'espérance mathématique est remplacée par les données instantanées, ce qui donne :

$$\hat{H}(n) = \hat{H}(n-1) + \mu.e(n-1).X(n)$$

Dans le cas d'un algorithme NLMS, après normalisation cette expression devient :

$$\hat{H}(n) = \hat{H}(n-1) + \mu.\frac{e(n-1).X(n)}{X^T(n)X(n)}$$

Dans le cadre de l'invention, on préfère toutefois utiliser un algorithme de type APA (*Affine Projection Algorithm),* notamment un algorithme APA adaptatif tel que celui décrit dans le FR 2 792 146 A1 précité.

Le point fort des algorithmes APA est leur convergence rapide, et ils constituent à ce titre un progrès majeur par rapport aux algorithmes de suppression d'écho de type LMS ou NLMS, qui nécessitent quelquefois plusieurs secondes pour leur stabilisation, les rendant mal adaptés à des applications de type "mains-libres" avec un débit vocal intermittent et un niveau pouvant rapidement varier.

L'algorithme APA est une généralisation de l'algorithme NLMS, dont le principe est de minimiser, non plus l'erreur courante e, mais le vecteur erreur *E*. Les équations qui décrivent le comportement de l'algorithme pour la mise à jour des coefficients du filtre sont les suivantes :

$$X(n) = \left[x(n), x(n-1), ..., x(n-L+1)\right]^T$$

$$mX(n) = \left[X(n), X(n-1), ..., X(n-P+1)\right]$$

$$E(n) = \left[e(n), e(n-1), ..., e(n-P+1)\right]^T$$

$X$ étant le vecteur des $L$ derniers échantillons ($L$ étant la taille du filtre), $mX$ étant la matrice des $P$ derniers *vecteurs X* ($P$ étant l'ordre de la projection affine), et $E$ étant le vecteur des $P$ dernières valeurs de l'erreur. L'équation d'adaptation d'un tel filtre est :

$$\hat{H}(n+1) = \hat{H}(n) + \mu m X(n)\left[m X(n)^T m X(n)\right]^{-1} E(n) = \hat{H}(n) + \mu.g$$

$\mu$ étant le pas de l'algorithme et $g$ étant le gradient.

L'expression du pas $\mu$ est la suivante :

$$\mu(n) = \frac{2\rho.s_y}{a.\rho.s_y + s_e}$$

$a$ et $\rho$ étant des paramètres choisis pour fixer le pas maximal d'adaptation (par exemple $a$ = 4 et $\rho$ = 2), et $s_y$ et $s_e$ représentant respectivement les puissances lissées du signal micro et de l'erreur.

*Détection de la double parole*

Le but premier de l'invention est d'évaluer un indice ou critère représentatif du degré de convergence ou de divergence de l'algorithme, pour en déduire la survenue d'une situation de double parole et définir ainsi les intervalles temporels pendant lesquels cette situation prévaut.

Il est possible de mettre en évidence, à partir des équations exposées plus haut décrivant le comportement de l'algorithme pour la mise à jour des coefficients du filtre, des comportements caractéristiques de la divergence, associés aux intervalles de double parole.

Il est notamment possible d'observer l'activité du vecteur gradient g pour détecter ces zones de double parole.

L'indice représentatif peut être une moyenne de l'autocorrélation des estimations instantanées du vecteur gradient, c'est-à-dire une moyenne de la norme euclidienne $\xi = \|g\|$ de ces estimées.

Hors périodes de double parole, lorsque le filtre adaptatif a convergé vers le filtre réel, cet indice approche d'un minimum, révélant une absence d'activité du vecteur gradient correspondant à une évolution lente des coefficients du filtre.

En revanche, la présence d'un signal de parole provenant du locuteur proche impacte fortement l'adaptation du filtre et provoque une augmentation du gradient, avec pour conséquence un déplacement des coefficients du filtre dans une large zone autour du filtre idéal, sans direction privilégiée.

La comparaison du paramètre $\xi$ à un seuil donné permet donc de discriminer les deux situations ci-dessus, double parole ou bien écho seul.

La décision est prise en comparant $\xi$ à un seuil : si $\xi$ est supérieur au seuil, le dispositif considèrera que l'on se trouve en présence d'une situation de double parole, et dans le cas contraire que l'on se trouve dans une situation d'écho seul.

Le seuil de détection est déterminé et pourra être adapté en fonction des conditions représentatives d'un usage classique dans l'environnement, notamment en fonction du rapport signal/écho et éventuellement du rapport signal/bruit. La valeur du seuil de détection peut être notamment modifiée de façon dynamique en fonction des niveaux d'énergie des signaux d'écho et de parole utile à un instant donné.

D'autre part, pour éviter des fausses détections liées aux irrégularités des signaux (dépassement du seuil sur une période très courte), il est souhaitable d'opérer un lissage du paramètre dans le temps, en évitant toutefois d'introduire dans le traitement un délai trop important qui aurait pour conséquence un retard à la détection de la double parole et au retour à une valeur au-dessous du seuil, c'est-à-dire des temps plus longs de montée et de descente de l'indice représentatif.

*Modification du pas d'adaptation sur détection de double parole*

Outre la précision de la détection de la double parole, un autre point important est de savoir quel traitement d'annulation d'écho sera opéré en situation de double parole, notamment le point de savoir s'il convient ou non d'arrêter l'adaptation du filtre.

Les dispositifs classiques ont pour effet de figer les coefficients du filtre en double parole pour éviter une désadaptation de celui-ci, du fait des composantes de parole utile mêlées à l'écho estimé. De ce fait, ils deviennent incapable de prendre en compte les variations lentes du chemin acoustique pendant toute la durée de la période de double parole.

L'invention propose, en cas de double parole, de maintenir l'adaptation du filtre mais avec une vitesse d'adaptation réduite, par modulation du pas.

De façon caractéristique, l'algorithme peut être exécuté avec trois valeurs de pas $\mu$ distinctes :

- une valeur élevée de pas (par exemple $\mu = 0,9$) utilisée en période d'écho seul, pour calculer les coefficients du filtre avec une grande rapidité d'adaptation ;
- une valeur faible (par exemple $\mu = 0,01$) utilisée en période de double parole, pour calculer le nouveau filtre avec une adaptation lente (les termes "rapide et "lente" étant entendus de manière relative) ; cette valeur faible assurera un compromis permettant d'éviter toute désadaptation rapide due à la présence de parole non corrélée à la voie du haut-parleur, tout en permettant cependant de suivre les évolutions lentes du chemin acoustique ;
- enfin, une valeur intermédiaire (par exemple $\mu = 0,2$) utilisée en permanence pour l'actualisation de la valeur du vecteur gradient $g$, cette valeur étant la même aussi bien en période de double parole qu'en période d'écho seul.

Le fait de disposer de deux pas différents, respectivement pour une situation d'écho seul et pour une situation de double parole, permet un traitement adapté à la situation que l'on détecte.

Par ailleurs, le fait d'utiliser une valeur intermédiaire, constante, pour évaluer l'indice représentatif et donc pour détecter la situation de double parole, présente comme avantage qu'une erreur de détection n'aura pas d'influence sur le comportement futur du système.

Concrètement, le choix du triplet de valeurs {0,01 ; 0,2 ; 0,9} pour les trois valeurs du paramètre $\mu$ permet d'atténuer l'écho de plus de 25 dB en situation d'écho seul, et de moins de 3 dB en situation de double parole, par le module d'annulation d'écho seul (module 40), c'est-à-dire hors post-traitement de suppression d'écho (par le module 42).

De préférence, afin d'éviter des changements trop brusques dans les valeurs du pas $\mu$, le passage d'une valeur à l'autre n'est pas discontinu. On peut par exemple augmenter ou diminuer le pas d'adaptation d'une valeur à l'autre par incréments de 0,005 par échantillon.

Une variante de mise en oeuvre consiste, au lieu d'exécuter l'algorithme avec des valeurs de pas prédéterminées, fixes (le triplet de valeurs décrit plus haut), à utiliser un pas variable de façon continue, comme avec le procédé exposée dans le FR 2 792 146 A1 précité.

Avec cette technique, le pas $\mu$ est un pas variable de façon continue en fonction des niveaux d'énergie du signal capté par le microphone, avant et après filtrage. Ce pas est accru lorsque l'énergie du signal capté est dominée par l'énergie de l'écho, et, inversement, réduit lorsque l'énergie du signal capté est dominée par l'énergie du bruit de fond et/ou de la parole du locuteur distant.

Comme on l'a indiqué plus haut, ce pas variable adaptatif peut être exprimé sous la forme :

$$\mu(n) = \frac{2\rho.s_y}{a.\rho.s_y + s_e}$$

$a$ et $\rho$ étant des paramètres choisis pour fixer le pas maximal d'adaptation (par exemple $a = 4$ et $p = 2$), et $s_y$ et $s_e$ représentant respectivement les puissances lissées du signal micro et de l'erreur.

Il convient alors de fixer les paramètres $a$ et $\rho$ de façon adaptée au traitement de la double parole de manière à avoir :

- une valeur maximale en écho seul (lorsque l'erreur est faible),
- une valeur nulle en parole utile seule, et
- une valeur qui tend vers zéro en double parole.

**Revendications**

1. Un procédé de traitement d'un signal audio dans un dispositif téléphonique "mains libres", notamment un dispositif autonome adaptable de manière amovible dans un véhicule automobile,
   ce dispositif comportant un microphone (18) pour capter un signal de parole (32, sp(n)) d'un locuteur proche (10) et un haut-parleur (16) pour reproduire un signal de parole (22, x(n)) d'un locuteur distant (12), ce haut-parleur étant susceptible d'introduire par couplage avec le microphone un écho acoustique parasite (36, z(n)),
   ledit procédé de traitement du signal audio comprenant :

   - un traitement d'annulation d'écho (40) par mise en oeuvre d'un algorithme de filtrage linéaire adaptatif, cet algorithme étant itéré avec un pas d'adaptation donné ;

- un traitement de détection et de prise en compte d'une situation de double parole ; et
- un traitement d'évaluation d'un indice représentatif du degré de convergence ou de divergence de l'algorithme de filtrage linéaire adaptatif, procédé dans lequel ledit traitement de détection et de prise en compte d'une situation de double parole comporte les étapes consistant à :

a) apprécier si au moins une condition prédéterminée est vérifiée, relative audit indice représentatif du degré de convergence ou de divergence de l'algorithme, qui a été évalué ;
b) déduire la survenue d'une situation de double parole à partir du résultat de l'appréciation de l'étape a) ; et
c) en cas de survenue de double parole, modifier au moins un paramètre de l'algorithme de filtrage linéaire adaptatif, en réaction à la détection de cette situation de double parole,

procédé **caractérisé en ce que** ledit au moins un paramètre modifié est le pas d'adaptation de l'algorithme, l'algorithme étant itéré avec :

- en l'absence de double parole, une première valeur de pas correspondant à une adaptation rapide du filtre, et
- sur détection d'une situation de double parole, une deuxième valeur de pas, différente de la première et non nulle, correspondant à une adaptation lente du filtre.

2. Le procédé de la revendication 1, dans lequel en cas de détection de double parole la valeur du pas est modifiée progressivement de la première valeur à la deuxième valeur.

3. Le procédé de la revendication 1, dans lequel l'algorithme est également itéré avec :

- une valeur spécifique de pas, propre au traitement de détection d'une situation de double parole, et différente des valeurs de pas utilisées pour le traitement d'annulation d'écho.

4. Le procédé de la revendication 3, dans lequel la valeur spécifique de pas est une valeur indépendante de la présence ou non d'une situation de double parole.

5. Le procédé de la revendication 3, dans lequel la valeur spécifique de pas est une valeur intermédiaire entre la première et la deuxième valeur de pas.

6. Le procédé de la revendication 1, dans lequel :

- l'indice représentatif est la norme du vecteur gradient décrivant l'adaptation du filtre adaptatif d'une itération de l'algorithme à la suivante, et
- la condition prédéterminée est une comparaison du gradient à un seuil, la situation de double parole étant détectée lorsque la norme du vecteur gradient est inférieure audit seuil.

7. Le procédé de la revendication 6, dans lequel le seuil est un seuil modifiable dynamiquement en fonction du niveau d'énergie du signal à filtrer.


**Patentansprüche**

1. Verfahren zur Verarbeitung eines Audiosignals in einer Telefonfreisprechvorrichtung, insbesondere einer autonomen Vorrichtung, die auf lösbare Weise in einem Kraftfahrzeug anpassbar ist,
wobei diese Vorrichtung ein Mikrofon (18) zum Auffangen eines Sprechsignals (32, sp(n)) eines nahen Sprechers (10) und einen Lautsprecher (16) zum Wiedergeben eines Sprechsignals (22, x(n)) eines entfernten Sprechers (12) aufweist, wobei dieser Lautsprecher geeignet ist, durch Kopplung mit dem Mikrofon ein akustisches Störecho (36, z(n)) einzuspeisen,
wobei das Verfahren zur Verarbeitung des Audiosignals Folgendes umfasst:

- eine Verarbeitung zur Echoaufhebung (40) durch Verwendung eines adaptativen linearen Filteralgorithmus, wobei dieser Algorithmus mit einem bestimmten Adaptationsschritt iteriert wird;
- eine Verarbeitung zur Erkennung und Berücksichtigung einer Doppelsprechsituation; und
- eine Verarbeitung zur Auswertung eines repräsentativen Index des Konvergenz- oder Divergenzgrades des adaptativen linearen Filteralgorithmus,

bei dem die Verarbeitung zur Erkennung und Berücksichtigung einer Doppelsprechsituation die folgenden Schritte aufweist:

a) Beurteilen, ob mindestens eine vorbestimmte Bedingung in Bezug auf den ausgewerteten repräsentativen Index des Konvergenz- oder Divergenzgrades des adaptativen linearen Filteralgorithmus verifiziert wird;
b) Ableiten des Eintritts einer Doppelsprechsituation aus dem Ergebnis der Beurteilung in Schritt a); und
c) für den Fall des Eintritts einer Doppelsprechsituation, Ändern mindestens eines Parameters des adaptativen linearen Filteralgorithmus als Reaktion auf die Erkennung dieser Doppelsprechsituation,

wobei das Verfahren **dadurch gekennzeichnet ist, dass** der mindestens eine geänderte Parameter der Adaptationsschritt des Algorithmus ist, wobei der Algorithmus iteriert wird mit:

- bei Fehlen einer Doppelsprechsituation, einem ersten Schrittwert, der einer schnellen Adaptation des Filters entspricht,
- bei Erkennen einer Doppelsprechsituation, einem zweiten Schrittwert, der von dem ersten verschieden und ungleich null ist, der einer langsamen Adaptation des Filters entspricht.

2. Verfahren nach Anspruch 1, bei dem für den Fall der Erkennung einer Doppelsprechsituation der Wert des Schrittes progressiv von dem ersten Wert in den zweiten Wert geändert wird.

3. Verfahren nach Anspruch 1, bei dem der Algorithmus auch iteriert wird mit:

- einem spezifischen Schrittwert , welcher der Verarbeitung zur Erkennung einer Doppelsprechsituation eigen ist und von den Schrittwerten, die für die Verarbeitung zur Echoaufhebung verwendet werden, verschieden ist.

4. Verfahren nach Anspruch 3, bei dem der spezifische Schrittwert ein Wert ist, der unabhängig davon ist, ob eine Doppelsprechsituation vorliegt oder nicht.

5. Verfahren nach Anspruch 3, bei dem der spezifische Schrittwert ein Zwischenwert zwischen dem ersten und dem zweiten Schrittwert ist.

6. Verfahren nach Anspruch 1, bei dem

- der repräsentative Index die Norm des Gradientenvektors ist, der die Adaptation des adaptativen Filters von einer Iteration des Algorithmus zur nächsten beschreibt, und
- die vorbestimmte Bedingung ein Vergleich des Gradienten mit einem Schwellwert ist, wobei die Doppelsprechsituation erkannt wird, wenn die Norm des Gradientenvektors kleiner ist als der Schwellwert.

7. Verfahren nach Anspruch 6, bei dem der Schwellwert ein Schwellwert ist, der in Abhängigkeit von dem Energiepegel des zu filternden Signals dynamisch veränderbar ist.

**Claims**

1. An audio signal processing method in a "hands-free" telephone device, in particular an autonomous device removably adaptable to a motor vehicle,
this device including a microphone (18) for picking up a speech signal (32, sp(n)) from a nearby speaker (10) and a loudspeaker (16) for reproducing a speech signal (22, x(n)) from a remote speaker (12), this loudspeaker being liable to introduce, by cross-coupling with the microphone, a spurious acoustical echo (36, z(n)),
said audio signal processing method comprising:

- an echo cancelling processing (40) implementing an adaptive linear filtering algorithm, this algorithm being iterated with a given adaptation pitch;
- a processing for detecting and taking into account a double-speech situation; and
- a processing for evaluating an index representative of the degree of convergence or divergence of the adaptive linear filtering algorithm,

method wherein said processing for detecting and taking into account a double-speech situation includes the steps of:

a) assessing if at least one predetermined condition is verified, which relates to said index representative of the algorithm convergence or divergence degree that has been evaluated;

b) deducing the occurrence of a double-speech situation from the result of the assessing of step a); and

c) in case of occurrence of double speech, modifying at least one parameter of the adaptive linear filtering algorithm, in reaction to the detection of this double-speech situation,

method **characterized in that** said at least one modified parameter is the adaptation pitch of the algorithm, the algorithm being iterated with:

- in the absence of double speech, a first pitch value corresponding to a rapid adaptation of the filter, and
- upon detection of a double-speech situation, a second pitch value, different from the first one and non-zero, corresponding to a slow adaptation of the filter.

2. The method of claim 1, wherein, in case of detection of double speech, the pitch value is modified progressively from the first value to the second value.

3. The method of claim 1, wherein the algorithm is also iterated with:

- a specific pitch value, peculiar to the processing for detecting a double-speech situation, and different from the pitch values used for the echo cancelling processing.

4. The method of claim 3, wherein the specific pitch value is a value independent of the presence or not of a double-speech situation.

5. The method of claim 3, wherein the specific pitch value is an intermediate value between the first and the second pitch value.

6. The method of claim 1, wherein:

- the representative index is the norm of the gradient vector describing the adaptation of the adaptive filter from one iteration of the algorithm to the next one, and
- the predetermined condition is a comparison of the gradient with a threshold, the double-speech situation being detected when the norm of the gradient vector is lower than said threshold.

7. The method of claim 6, wherein the threshold is a threshold that is dynamically modifiable as a function of the level of energy of the signal to be filtered.

## FIG_1

locuteur
distant

E

RED BRUIT
SUPP ECHO

ANN. ECHO

DAC

ADC

S

locuteur
proche

## FIG_2

locuteur
distant $x(n)$

filtre de
compensation
(adaptatif)

$\hat{H}(n)$

(environnement
acoustique)

$H(n)$

$\hat{z}(n)$

$z(n)$ écho
acoustique

Signal filtré
$e(n) = y(n) - \hat{z}(n)$

$y(n)$

$b(n)$ bruit
local

$sp(n)$

locuteur
proche

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008049982 A1
- US 20080101622 A1
- GB 2342832 A
- FR 2792146 A1